# EUROPEAN PATENT APPLICATION

(11) **EP 4 841 330 A1**
(43) Date of publication of application: **18.11.2026**
(21) Application number: 24957356.9
(22) Date of filing: 07.10.2024
(51) Int. Cl.: G02B 27/01, G02C 5/22, G02C 5/14, G06F 1/16

(54) **SMART GLASSES INCLUDING DETACHABLE EYEGLASS TEMPLE PARTS**

(71) Applicant: Innottica Co., Ltd, Daegu, 41002 (KR)
(72) Inventor: DO, Jee Hyun, Seoul 05510 (KR); DO, Keun Ho, Daegu 41002 (KR)
(74) Representative: Isarpatent
(86) International application number: PCT/KR2024/015208
(87) International publication number: WO 2026/079504

(57) **Abstract**

[Summary]

The present invention relates to a smart glass capable of freely performing separation or connection of temples according to a user's needs, and being stored in a state where the temples are folded for easy storage and carrying in addition to attachment and detachment of the temples.

## Description

### [RELATED APPLICATIONS]

This application claims the benefit of priority of Korean Patent Application No. 10-2024-0135571 filed on October 7, 2024, the contents of which are incorporated by reference as if fully set forth herein in their entirety.

### [FIELD AND BACKGROUND OF THE INVENTION]

The present invention relates to a smart glass including a detachable temple part.

An electronic device for virtual reality or augmented reality (AR) has a main circuit board (hereinafter, "main PCB") located at the center of an AR device, so that the AR device is mainly in the type of goggles rather than the type of glasses, and in the case of the type of glasses, it has a monocular or camera-less configuration.

In addition, the AR device may have a large volume because the main PCB is located at the center of the device. When a user has worn the AR device in the form of glasses, various modules such as a camera or display may be mounted at a location corresponding to the user's eyes.

Meanwhile, smart glasses, which have attracted attention as a next-generation wearable device, have fostered highly a feeling of rejection due to a higher price range, inconvenience of having to fit special lenses in the case of glasses wearers, dizziness upon wearing for long periods of time, lack of universality in design, and the like, thereby being not established as universal devices, and are limited in accessibility for individuals in daily life.

Accordingly, they can be used for daily life purposes by eliminating the inconvenience, the feeling of rejection, and the like of existing smart glasses, and by allowing easy replacement of glasses arms suitable for the purpose of smart glasses as needed, it is necessary to increase accessibility to smart glasses.

### SUMMARY OF THE INVENTION

### [Technical Problem]

It is one aspect of the present invention to provide a smart glass capable of freely performing separation or connection of glasses arms according to a user's needs, and being stored in a state where the glasses arms are folded for easy storage and portability in addition to attachment and detachment of the glasses arms.

It is one aspect of the present invention to provide a smart glass capable of continuous use without performing a separate charging operation only by replacement of a temple part.

It is one aspect of the present invention to provide a smart glass capable of management or repair by separating only necessary components among lens frames (or rims) and glasses arms (or temples).

### [Technical Solution]

A smart glass according to one example of the present invention may comprise: a lens frame part having a flexible circuit board accommodated therein; a pair of temple parts provided on each of both left and right sides of the lens frame, wherein each temple part has a circuit board accommodated therein, and a first connector for power supply and/or data transmission is provided on an apical surface facing the lens frame part; and a hinge module detachably connecting the temple part to the lens frame part, wherein the hinge module is provided with a second connector connectable to the first connector, and enables to rotate the temple part around a first rotation axis in a state of being connected to the temple part.

According to one example of the present invention, the hinge module may comprise: a first connecting member formed in a hollow cylindrical shape with an open top and including a fastening hole on a side surface and a guide hole formed to extend along an arc direction centered on the first rotation axis from the fastening hole; a second connecting member rotatably disposed in the hollow of the first connecting member and having a second connector formed on one side facing the fastening hole; and a third connecting member formed to extend in a first direction from the first connecting member.

According to one example of the present invention, the second connector may be electrically connected to the flexible circuit board crossing the first connecting member from the lens frame.

According to one example of the present invention, the first connector may have a guide groove formed in an up-down direction at a portion adjacent to the apical surface of the temple part.

According to one example of the present invention, when the first connector passes through the fastening hole to be fastened to the second connector, an electrical path may be formed between the flexible circuit board and the circuit board.

According to one example of the present invention, when the first connector passes through the fastening hole to be fastened to the second connector, the guide groove may guide the temple part to rotate around the first rotation axis along the guide hole in a state where the first connector is fastened to the second connector, and the temple part may rotate to bind to the third connecting member.

According to one example of the present invention, the first connecting member may be formed as a housing structure in communication with the inside of the lens frame part so that the flexible circuit board enables to be connected to the second connector without being exposed to the outside.

According to one example of the present invention, the flexible circuit board may comprise: a rigid region; a flexible region with ductility, having higher flexibility than the rigid region and being capable of bending; and a rigid/flexible region in which regions having different flexibility are combined.

According to one example of the present invention, in the flexible circuit board, a portion which is connected to the second connector across the first connecting member may be configured with a flexible region capable of allowing repeated rotation of the second connecting member.

According to one example of the present invention, the first connector may be a plug connector, and the second connector may be a receptacle connector into which the first connector is inserted and fastened.

According to one example of the present invention, a magnetic body in the form of a protrusion may be provided on one surface of the temple part facing the third connecting member so that the temple part enables to be coupled with the third connecting member by rotating around the first rotation axis, and a magnetic body coupling groove into which the magnetic body is fitted or inserted may be provided in the third connecting member.

According to one example of the present invention, a magnet may be installed on one or more of a protruding surface of the magnetic body or a bottom surface of the magnetic body coupling groove, and when magnets are installed on both the protruding surface and the bottom surface, magnets having different polarities are installed, whereby the magnetic body and the magnetic body coupling groove may be magnetically coupled.

According to one example of the present invention, two or more magnetic body coupling grooves may be provided, and arranged at a constant interval in a left-right direction.

According to one example of the present invention, a battery electrically connected to the circuit board may be accommodated at the rear end of the temple part.

According to one example of the present invention, the flexible circuit board may be electrically connected to a camera module or a display module, which is accommodated in the lens frame part.

According to one example of the present invention, the camera module and the display module may be electrically connected to any one of the circuit boards provided in the pair of temple parts through the flexible circuit board.

According to one example of the present invention, the fastening hole may be formed such that a width (W1) is larger than a width (W2) of the guide hole, and a length (L1) of the fastening hole is smaller than a length (L2) of the guide hole.

According to one example of the present invention, the circuit board may comprise an integrated circuit chip provided with one or more of a processor, a memory, a power management module, or a communication module.

According to one example of the present invention, the communication module may verify or authenticate the smart glass within a communication network using IMSI (international mobile subscriber identity) information stored in the smart glass.

According to one example of the present invention, the temple part may be provided with a speaker module capable of outputting an audio signal to the outside.

### [Effects of Invention]

According to one example of the present invention, the temple part of the smart glass is not only detachably connected to the lens frame part by the hinge module, but also can rotate within a certain range along an arc direction centered on the rotation axis in a state of being physically/electrically connected to the hinge module, so that the temple part can be stored in a folded state while maintaining an electrical path between the flexible circuit board and the circuit board.

According to one example of the present invention, among a pair of temple parts connected by the hinge module, it is possible to separate only the temple part in which battery charging or component repair is required separately, and it is possible to continuously use the smart glass only by replacement of the temple part provided as a spare.

According to one example of the present invention, the temple part is magnetically coupled to the third connecting member by rotating in an arc direction around the first rotation axis in a state where the first connector is inserted and fastened to the second connector provided in the second connecting member of the hinge module, whereby the temple part can be firmly fixed in an unfolded state.

### [DESCRIPTION OF DRAWINGS]

Figure 1 is a block configuration diagram of a smart glass according to one example of the present invention.
Figure 2 is a perspective diagram of a smart glass according to one example of the present invention.
Figure 3 is an exploded perspective diagram of a connection structure of a temple part in the smart glass of Figure 2.
Figure 4 is a schematic diagram of a flexible circuit board in the smart glass of Figure 2.
Figure 5 is a schematic diagram of a connection structure between a flexible circuit board and a second connector according to one example of the present invention.
Figure 6 is an operating state diagram of the smart glass of Figure 2.

### [DESCRIPTION OF SPECIFIC EMBODIMENTS OF THE INVENTION]

Hereinafter, with reference to the attached drawings, examples of the present invention will be described in detail so that those having ordinary knowledge in the technical field to which the present invention belongs can easily implement them. The present invention can be implemented in several different forms, which is not limited to the examples described herein. In the drawings, parts unrelated to the description have been omitted to clearly describe the present invention, and the same reference numerals have been assigned to the same or similar components throughout the specification.

In addition, throughout the specification, when it is said that a part "comprises" a component, this means that it does not exclude other components, but may further include other components, unless otherwise specifically stated.

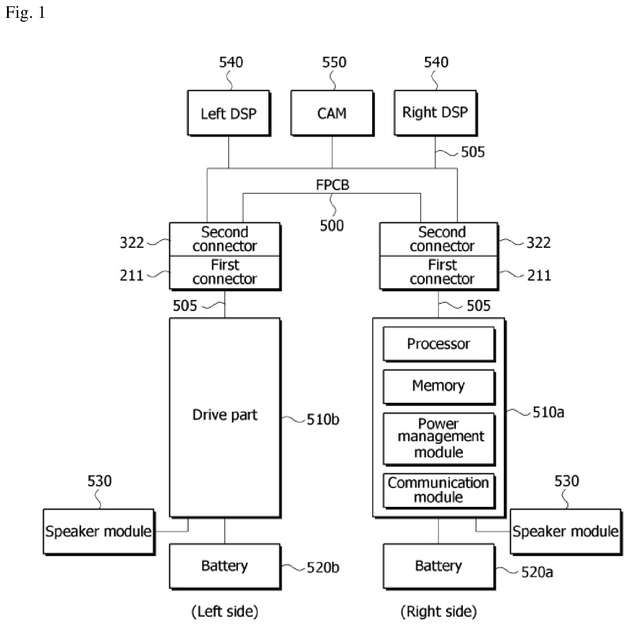

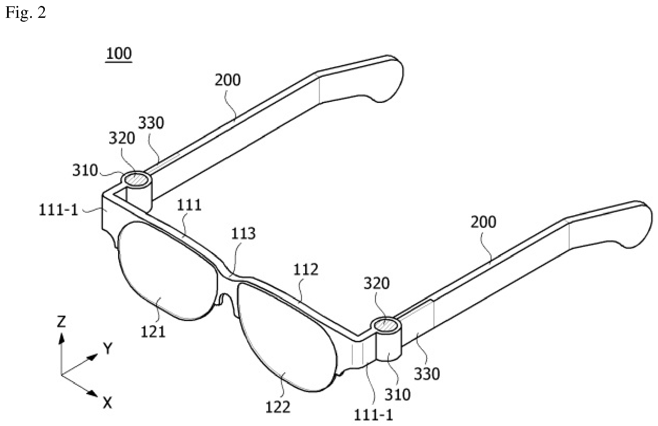

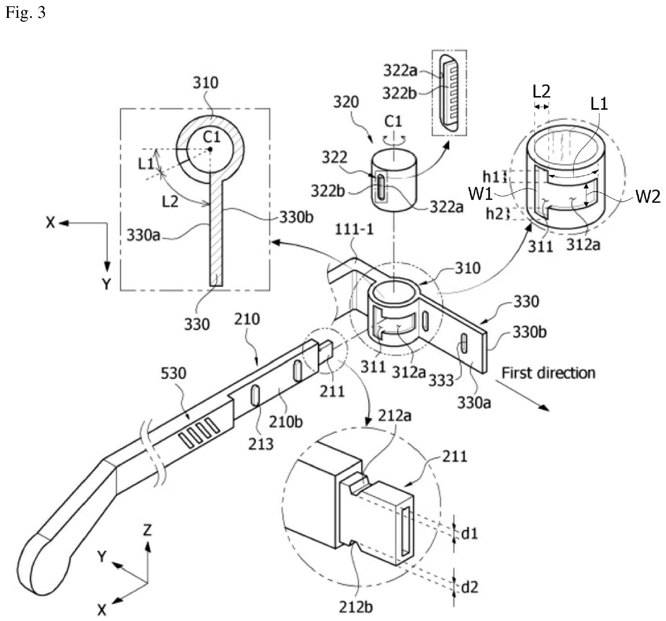

Figure 1 is a block configuration diagram of a smart glass according to one example of the present invention, Figure 2 is a perspective diagram of a smart glass according to one example of the present invention, and Figure 3 is an exploded perspective diagram of a connection structure of a temple part in the smart glass of Figure 2.

Referring to the drawings, the smart glass (100) may comprise a lens frame part (110), a temple part (200), and a hinge module (300), which form an appearance of the device, and may comprise circuit boards (510a, 510b), a flexible circuit board (500), batteries (520a, 520b), and electronic parts, which are disposed on any one of these respective components.

The lens frame part (110) may correspond to a rim on which lenses are mounted in general glasses, and the temple part (200) may be understood as a component corresponding to a temple.

According to one example of the present invention, a user can visually recognize surrounding objects or environments in a state where a smart glass (100) is worn. For example, the smart glass (100) may be a head mounting device (HMD) or smart glasses capable of providing images directly in front of the user's eyes.

The lens frame part (110) may be formed to hold a first lens (121) and a second lens (122). The smart glass (100) may provide visual information to the user through the first lens (121) and the second lens (122).

When a user has worn a smart glass (100), the first lens (121) and the second lens (122) may be disposed at positions corresponding to the user's right and left eyes, respectively. The first lens (121) and the second lens (122) may be fixed by a first holding portion (111) and a second holding portion (112) of the lens frame part (110), respectively, and the first holding portion (111) and the second holding portion (112) may be connected by a nose bridge (113).

For example, the first holding portion (111) and the second holding portion (112) may each be formed in a shape that holds only upper portions and some side edges of the first lens (112) and the second lens (122) (see Figure 2).

In addition, it may also include a case where the first holding portion (111) and the second holding portion (112) are each formed in a closed curve shape that surrounds the edges of the first lens (112) and the second lens (122).

The lens frame part (110) with the appearance formed in the shape as described above may be made of a housing structure to provide a space where electronic parts may be disposed inside or outside the lens frame part (110). The electronic parts may be electrically connected to each other through an electric power transmission member (505).

The lens frame part (110) and/or the lenses (121, 122) may be equipped with a display module (540) for providing visual information to the user.

For example, the display module (540) may comprise a display, a holographic device, or a protector, and a control circuit for controlling the relevant devices. In addition, the display module (540) may comprise a touch sensor set to sense a touch, a pressure sensor (not shown) set to measure a strength of the force generated by the touch.

The display module (540) may display various information processed in the smart glass (100). For example, the display module (540) may display a user interface (UI) or a graphic user interface (GUI) related to an operation performed by the smart glass (100) upon charging, or an operation of performing data communication according to a connector connection.

For example, the first and second lenses (121, 122) may be formed transparently or translucently. The first and second lenses (121, 122) may comprise glass of a translucent material, or a window, the light transmittance of which may be adjusted as a coloring concentration is adjusted.

According to one example of the present invention, the temple part (200) may be provided as a pair and provided on both left and right sides of the lens frame part (110), respectively, which may be formed as a housing structure of a conductive/non-conductive material.

The temple part (200) may be detachably connected to the lens frame part (110) using the hinge module (300) to be described below as a medium, which may rotate within a certain range around the first rotation axis (C1) in a state of being connected to the hinge module (300).

That is, the smart glass (100) may be configured to be capable of folding or unfolding the pair of temple parts (200) with respect to the lens frame part (110) through the hinge module (300).

Therefore, when the user does not wear the smart glass (100), the user can carry or store the glasses temple part (200) separately by separating it from the lens frame part (110) by the hinge module (300), and charge it as needed.

On the contrary, when the user wears the smart glass (100), the user can connect the temple part (200) to the lens frame part (110), and then unfold the temple part (100) by rotation.

The temple part (200) is formed as a housing structure made of a conductive and/or non-conductive material, and provides a space where one or more electronic parts may be accommodated inside or outside. The temple part (200) may be provided with components including a circuit board (510a, 510b), a battery (520a, 520b), a speaker module (530), and one or more electric power transmission members (505).

The circuit board (510a, 510b) may comprise components for driving the smart glass (100). For example, the circuit board (510a, 510b) may comprise at least one integrated circuit chip, and the integrated circuit chip may be provided with one or more of a processor, a memory, a power management module (PMIC, power management integrated circuit), or a communication module.

The circuit board (510a, 510b) may be an interposer board, which may be accommodated inside the temple part (200) to be electrically connected to the battery (520a, 520b) through the electric power transmission member (505), may be connected to the flexible circuit board (500) through the connection between the first and second connectors (211, 322), and may transmit an electric signal to the display module (540) and the camera module (550), arranged in the lens frame part (110), through the flexible circuit board (500).

The electric power transmission member (505) is a component capable of transmitting electric power, which may comprise, for example, a wire (not shown) including a plurality of cables, or a flexible printed circuit board, where the shape of the electric power transmission member (505) may be variously modified in consideration of the number and/or type of cables, and the like.

The battery (520a, 520b) may be electrically connected to the electronic parts of the smart glass (100), and may supply electric power to the electronic parts. The battery (520a, 520b) may include a non-rechargeable primary battery, a rechargeable secondary battery, or a fuel battery.

The speaker module (530) is a device that can output an audio signal to the outside, which may be disposed on one side of the temple part (200), and may comprise a speaker or a receiver. The speaker may be used for general purposes such as multimedia playback or recording playback, and the receiver may be used to receive an incoming phone call. The receiver may be implemented separately from the speaker, or may be implemented as a part thereof.

According to one example of the present invention, the temple part (200) may be equipped with a first connector (211) for power supply and/or data transmission at the tip (210).

For example, the first connector (211) may be a plug connector. The first connector (211) may be composed of a plug housing (211a), and a first connection terminal (211b) disposed inside the plug housing (211a). The first connection terminal (211b) is a terminal performing a role of transmitting data or supplying electric power upon fastening of the first connector (211) and the second connector (322). A latch (not shown) for maintaining the fastened state with the second connector (322) may be provided in the first connection terminal (211b).

The first connector (211) may be provided in a form that protrudes forward from the apical surface (210a) or in the length direction of the temple part (200). Here, the direction where the first connector (211) faces the second connector (322) is defined as forward, and the direction where it faces the temple part (200) is defined as backward.

The first connector (211) may be provided with a guide groove which is a constitution for guiding the temple part (200) to rotate around the first rotation axis (C1) in a state where the first connector (211) is fastened to the second connector (322).

The guide groove may be formed in an up-down direction at a portion adjacent to the apical surface (210a) of the temple part (200) from the backward side of the first connector (211). The guide groove may comprise an upper guide groove (212a) formed at an upper side portion, and a lower guide groove (212b) formed at a lower side portion while facing the upper guide groove (212a). The guide groove (212a, 212b) may be formed in a shape corresponding to a guide hole (312) so that it can guide the temple part (200) to rotate along the guide hole (312). For example, the guide groove (212a, 212b) may have a dimple or groove shape, and may be formed in an indented or concave shape.

The guide groove (212a, 212b) may have a depth to the extent that the first connector (211) enables to rotate along the guide hole (312) after passing through a fastening hole (311), which is described below, to be fastened to the second connector (322). The upper guide groove (212a) may be formed in the form of a groove having a first depth (d1), and the lower guide groove (212b) may be formed in the form of a groove having a second depth (d2). The first depth (d1) may be greater than or equal to h1, which is a height difference between the upper portion of the fastening hole (311) and the guide hole (312), and the second depth (d2) may be greater than or equal to h2, which is a height difference between the lower portion of the fastening hole (311) and the guide hole (312).

According to one example of the present invention, the hinge module (300) may comprise a first connecting member (310), a second connecting member (320), and a third connecting member (330).

According to one example of the present invention, the first connecting member (310) may be provided in a portion (111-1) extending in the first direction from one end of the first holding portion (111) of the lens frame part (110).

The first connecting member (310) may be formed in a housing structure, and a space provided therein may be communicated with the inside of the lens frame part (110). To this end, the first connecting member (310) may be formed integrally with the lens frame part (110).

Under such a structure, the flexible circuit board (500) accommodated in the inside of the lens frame part (110) may extend to the inside of the first connecting member (310) without being exposed to the outside, and may be electrically connected to the second connector (322) of the second connecting member (320) across the first connecting member (310).

The first connecting member (310) may be formed in a hollow cylindrical shape with an open top, and may provide a space where the second connecting member (320) may be rotatably disposed on the inside.

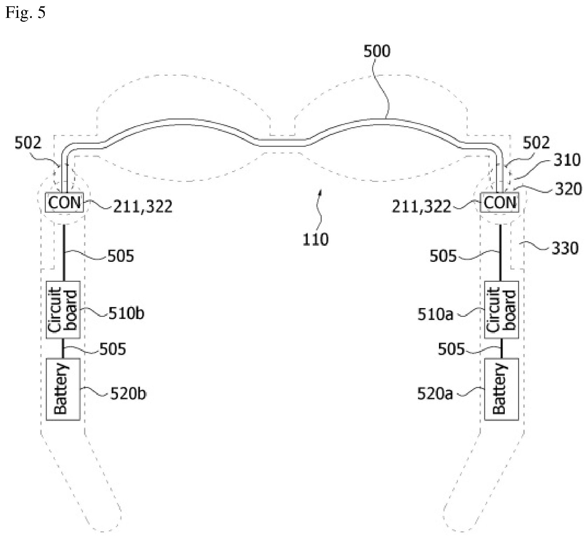

At this time, the space provided in the inside of the first connecting member (310) is distinguished from the hollow which can be exposed to the outside due to the open cylindrical top (see Figure 5).

In the first connecting member (310), a fastening hole (311) and a guide hole (312) may each penetrate to be formed on one side surface facing the tip (210) of the temple part (200). Accordingly, the inner space in the first connecting member (310) may communicate with the outside through the fastening hole (311) or the guide hole (312).

The fastening hole (311) may be formed to have a width (W1) and a length (L1) at a portion close to the lens frame part (110) from the side surface of the first connecting member (310). The guide hole (312) may be extended and formed to have a width (W2) and a length (L2) along an arc direction centered on the first rotation axis (C1) from the center position of the fastening hole (311). When the guide hole (312) is compared to the fastening hole (311), it may be formed at a portion far from the lens frame part (110) or a portion close to the third connecting member (330) relatively.

Here, the widths (W1, W2) of the fastening hole (311) and the guide hole (312) may mean the lengths of the first connecting member (310) in the height direction, and the lengths (L1, L2) may mean the lengths in the arc direction centered on the first rotation axis (C1).

The width (W1) of the fastening hole (311) may be formed to be larger than the width (W2) of the guide hole (312). For example, the width (W1) of the fastening hole (311) may be equal to the value obtained by adding h1 and h2 to the width (W2) of the guide hole (312).

The length (L1) of the fastening hole (311) may be formed to be smaller than the length (L2) of the guide hole (312).

Such a structure is for enabling the temple part (200) to rotate in an arc direction centered on the first rotation axis (C1) along the guide hole (312) in a state where the first connector (211) of the temple part (200) passes through the fastening hole (311) to be inserted and fastened to the second connector (322) of the second connecting member (320).

That is, the smart glass (100) of the present invention may be in a state where the temple part (200) is folded when the first connector (211) is fastened to the second connector (322), and if it is rotated to the maximum along the guide hole (312), the temple part (200) may be in an unfolded state so that the user may wear it.

According to one example of the present invention, the second connecting member (320) is a component performing a role of an electrical connection and a rotation medium, which may be formed in a cylindrical shape.

The second connecting member (320) may be rotatably inserted and disposed into the hollow of the first connecting member (310) through the open upper portion of the first connecting member (310). The second connecting member (320) may rotate only within a certain angle range in a state of being disposed in the inner space of the first connecting member (310).

The second connecting member (320) may be provided with a second connector (322) for electrical connection on one side surface. The second connector (322) may be electrically connected to the flexible circuit board (500) extending across the first connecting member (310).

The second connector (322) is a component for supplying power or transmitting data by being fastened to the first connector (211), wherein the first connector (211) may be physically/electrically connected to the second connector (322).

For example, the first connector (211) may be a plug connector, the second connector (322) may be a receptacle connector, and the second connector (322) may be made of a structure for insertion and fastening of the first connector (211). The second connector (322) may comprise an opening (322a) in which one side surface of the second connecting member (320) is open, and a second connecting terminal (322b) disposed on the inner side of the opening (322a). Multiple receptacle pins (not shown) may be disposed on the second connecting terminal (322b).

Accordingly, when the first connector (211) is inserted into the second connector (322) for electrical connection, the first connection terminal (211b) of the first connector (211) may be inserted to the inside of the opening (322a) and connected to the second connection terminal (322b) of the second connector (322) side.

To this end, the second connecting member (320) may be inserted and arranged in the inner side space of the first connecting member (310) so that the second connector (322) may face the fastening hole (311). Under such a structure, the first connector (211) may be inserted and fastened to the second connector (322) by passing through the fastening hole (311).

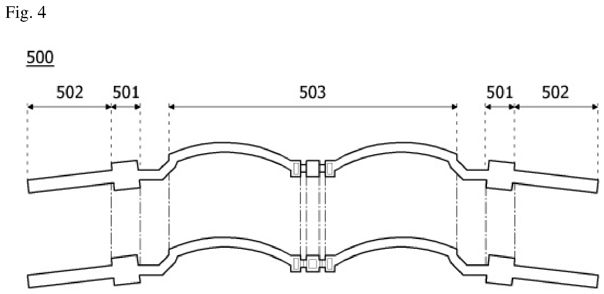

Figure 4 is a schematic diagram of a flexible circuit board in the smart glass of Figure 2, and Figure 5 is a schematic diagram of a connection structure between a flexible circuit board and a second connector according to one example of the present invention.

Referring to the drawings, the flexible circuit board (500) may comprise a rigid region (501) having less flexibility than other regions, a flexible region (502) with ductility, having relatively higher flexibility than the rigid region (501) and being capable of bending, and a rigid/flexible region (503) in which regions having different flexibility are combined compositely. The partial flexibility difference in the flexible circuit board (500) may be implemented by differences in materials or partially arranged auxiliary substrates.

The flexible region (502) may be applied to a portion where the flexible circuit board (500) is physically and electrically connected to the second connector (322) of the second connecting member (320) across the first connecting member (310) at both left and right ends of the flexible circuit board (500).

The flexible region (502) may have flexibility to the extent capable of allowing the second connecting member (320) disposed in the hollow of the first connecting member (310) to rotate repeatedly, and may be provided with a sufficient length to be physically connected to the second connector (322).

Under such a structure, in a process in which the user folds and unfolds the temple part (200), the second connecting member (320) may rotate in a state where the electrical connection is maintained (state where the first connector (211) and the second connector (322) are fastened).

According to one example of the present invention, the third connecting member (330) may be a component formed to extend in a first direction from one side of the first connecting member (310).

Here, the first direction may mean the y-axis direction of the coordinate system or the direction to which the temple part in the unfolded state is directed when the user has unfolded the folded temple part for wearing the smart glass.

The third connecting member (300) may be formed in a thin plate shape, and may comprise a first surface (330a) and a second surface (330b) disposed to face each other oppositely. The first surface (330a) may mean a surface facing the side surface (210b) of the temple part (200) when the temple part (200) has unfolded toward the first direction, and the second surface (330b) may mean the other surface toward the opposite direction to the first surface (330a).

One or more magnetic body coupling grooves (333) formed long in the up-down direction may be provided on the first surface (330a). Hereinafter, the magnetic body may be defined as a substance having a property to attach to a magnet, and may be, for example, iron or a magnet.

The magnetic body coupling groove (333) may be formed in the form of a slit groove, wherein two slit grooves may be formed to be spaced apart in the left- right direction. In this specification, a structure in which two magnetic body coupling grooves (333) are arranged in the left-right direction is mainly described, but it may also include a structure in which multiple magnetic body coupling grooves (333) are arranged with the same spacing in the left-right direction.

For example, the magnetic body coupling groove (333) may be formed in the form of a slit groove formed long in the left-right direction, and in the case of such a form, the magnetic body coupling grooves (333) may be arranged with the same spacing in the up-down direction.

One side surface (210b) of the temple part (200) facing the first surface (333a) may be provided with a magnetic body (213) in the form of a protrusion protruded to be capable of fitcoupling or insertion-coupling into the magnetic body coupling groove (333).

For example, a magnet magnetically coupled with the magnetic body (213) may be installed on the bottom surface (333a) of the magnetic body coupling groove (333). Alternatively, a magnet magnetically coupled with the bottom surface (333a) of the magnetic body coupling groove (333) may be installed on the protruding surface (213a) of the magnetic body (213). If magnets are installed on both the bottom surface (333a) of the magnetic body coupling groove (333) and the protruding surface (213a) of the magnetic body (213), both magnets should have different polarities so that a repulsive force is not generated.

Therefore, under such a structure, the magnetic body (213) may be firmly fixed to the magnetic body coupling groove (333) by the magnetic force in a state of being fitted or inserted into the magnetic body coupling groove (333), and accordingly, it is possible to stably maintain a state where the temple part (200) is unfolded.

In this specification, the state where the temple part (200) is folded may mean a state where in the temple part (200), the first connector (211) passes through the fastening hole (311) to be fastened to the second connector (322).

In addition, the state where the temple part (200) is unfolded may mean a state where the temple part (200) is coupled to the third connecting member (330) by rotating to the maximum angle along the guide hole (312) in a state where the first connector (211) is fastened to the second connector (322).

Here, the state where the temple part (200) is coupled to the third connecting member (330) may mean a state where the magnetic body (213) of the temple part (200) is fitted or inserted into the magnetic body coupling groove (333) of the third connecting member (330), and magnetically coupled to be fixed.

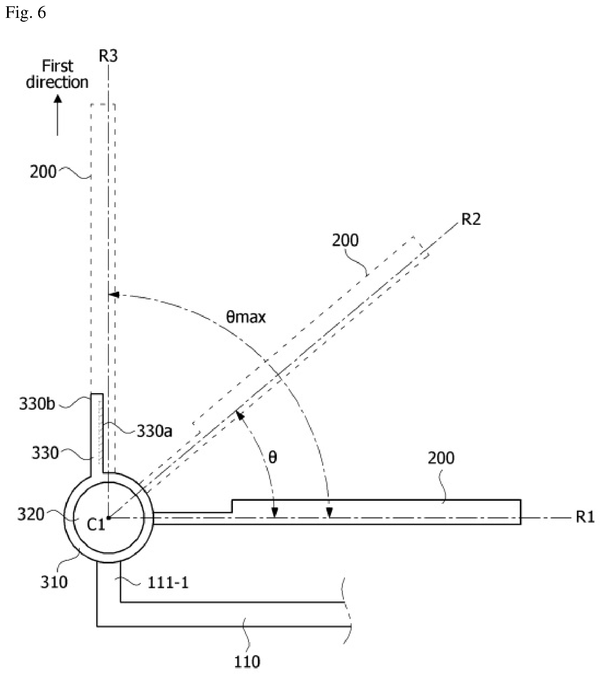

Figure 6 is an operation state diagram of the smart glass of Figure 2, and with reference to this, hereinafter, the structure in which the temple part is connected to the lens frame part by the hinge module will be described.

An initial state where the temple part (200) is fastened to the hinge module (300) is referred to as an R1 state; a state where the temple part (200) is rotated by θ is referred to as an R2 state; and a state where it is rotated by θmax is referred to as an R3 state. Here, the R3 state may mean a state where it is rotated to the maximum so that the length direction of the temple part (200) faces the first direction.

The temple part (200) may rotate within a range satisfying 0≤ θ ≤ θmax. When it rotates to the R3 state in a state where the first connector (211) of the temple part (200) is inserted and fastened to the second connector (322) of the second connecting member (320), the magnetic body (213) of the temple part (200) may be fixed by being coupled to the magnetic body coupling groove (333) of the third connecting member (330).

Meanwhile, a user using the smart glass (100) of the present invention can freely separate or connect the temple part (200) as needed, and can fold it in a state where the temple part (200) is connected to the hinge module (300), so that it is possible to facilitate storage and carrying of the smart glass.

On the other hand, looking at US Patent Application Publication No. 2023-0266802 (August 24, 2023), a structure is disclosed, in which a temple (leg) is detachably connected to a frame through a hinge (smart hinge), but in such a structure, the temple cannot be folded in the state where the temple is connected to the hinge.

In the smart glass (100) of the present invention, a charging status of the battery (520a, 520b) provided in the temple part (200), and the like can be checked through the display module (540), or the remaining amount of the battery (520a, 520b) can be checked through an indicator (not shown) provided in the temple part (200).

A user who has checked the remaining amount of the battery (520a, 520b) can charge the battery (520a, 520b) through a USB port (not shown) provided on one side of the temple part (200) in a state where the temple part (200) is connected to the lens frame part (110) or a state where the temple part (200) is separated from the lens frame part (110).

In addition, if the user has a spare temple part (200A), the user can continuously use the smart glass (100) without performing a separate battery charging operation by disconnecting the temple part (200B) that charging is required, and then connecting the temple part (200A) in a fully charged state.

When such a smart glass (100) is used as an industrial or medical wearable device, the user can continuously use it only by replacing the temple part, so that it is possible to greatly improve work efficiency.

Furthermore, upon using the smart glass of the present invention, the user can separate and use the temple parts in daily life or industrial sites.

In industrial sites sensitive to technology leaks, the user can connect the temple part usable only in the site to the lens frame part, and then authenticate the smart glass within the network using international mobile subscriber identity (IMSI) information stored in the temple part.

In addition, since the data collected in real time in a process that the user uses the smart glass in the site is stored in a memory accommodated in the temple part, the work is finished, and then the temple part with the data stored is retrieved, and the user can continuously use the smart glass by connecting the temple part used in daily life to the lens frame part.

The preferred examples of the present invention have been described above, but the present invention is not limited thereto, and it is possible to implement various modifications within the scope of the claims, the detailed description of invention, and the attached drawings, and these also naturally fall within the scope of the present invention.

### [Explanation of Reference Numerals]

- 100: smart glass: 110: lens frame part
- 200: temple part: 211: first connector
- 300: hinge module: 310: first connecting member
- 311: fastening hole: 312: guide hole
- 320: second connecting member: 322: second connector
- 330: third connecting member: 500: flexible circuit board
- 510: circuit board: 520: battery

## Claims

1. A smart glass, comprising:
a lens frame part having a flexible circuit board accommodated therein;
a pair of temple parts provided on each of both left and right sides of the lens frame part, wherein each temple part has a circuit board accommodated therein, and a first connector for at least one of power supply or data transmission is provided on an apical surface facing the lens frame part; and
a hinge module detachably connecting the temple part to the lens frame part, wherein the hinge module is provided with a second connector connectable to the first connector, and enables to rotate the temple part around a first rotation axis in a state of being connected to the temple part, wherein
the hinge module comprises:
a first connecting member formed in a hollow cylindrical shape with an open top and including a fastening hole on a side surface and a guide hole formed to extend along an arc direction centered on the first rotation axis from the fastening hole; a second connecting member rotatably disposed in the hollow of the first connecting member and having the second connector formed on one side facing the fastening hole; and a third connecting member formed to extend in a first direction from the first connecting member,
the second connector is electrically connected to the flexible circuit board crossing the first connecting member from the lens frame,
the first connector has a guide groove formed in an up-down direction at a portion adjacent to the apical surface of the temple part,
when the first connector passes through the fastening hole to be fastened to the second connector, an electrical path is formed between the flexible circuit board and the circuit board, and
the guide groove guides the temple part to rotate around the first rotation axis along the guide hole in a state where the first connector is fastened to the second connector, and the temple part rotates to be capable of binding to the third connecting member.

2. The smart glass according to claim 1, wherein
the first connecting member is
formed as a housing structure in communication with the inside of the lens frame part so that the flexible circuit board enables to be connected to the second connector without being exposed to the outside.

3. The smart glass according to claim 2, wherein
the flexible circuit board comprises:
a rigid region;
a flexible region with ductility, having higher flexibility than the rigid region and being capable of bending; and
a rigid/flexible region in which regions having different flexibility are combined, and
a portion which is connected to the second connector across the first connecting member is configured with a flexible region to be capable of allowing repeated rotation of the second connecting member.

4. The smart glass according to claim 1, wherein
the first connector is a plug connector, and
the second connector is a receptacle connector into which the first connector is inserted and fastened.

5. The smart glass according to claim 1, wherein
a magnetic body in the form of a protrusion is provided on one surface of the temple part facing the third connecting member so that the temple part
enables to be coupled with the third connecting member by rotating around the first rotation axis, and
a magnetic body coupling groove into which the magnetic body is fitted or inserted is provided in the third connecting member.

6. The smart glass according to claim 5, wherein
a magnet is installed on one or more of a protruding surface of the magnetic body or a bottom surface of the magnetic body coupling groove, and
when magnets are installed on both the protruding surface and the bottom surface, magnets having different polarities are installed, whereby the magnetic body and the magnetic body coupling groove are magnetically coupled.

7. The smart glass according to claim 5, wherein
two or more magnetic body coupling grooves are provided, and arranged at a constant interval in a left-right direction.

8. The smart glass according to claim 1, wherein
a battery electrically connected to the circuit board is accommodated at the rear end of the temple part.

9. The smart glass according to claim 1, wherein
the flexible circuit board is
electrically connected to a camera module or a display module, which is accommodated in the lens frame part, and
the camera module and the display module are electrically connected to any one of the circuit boards provided in the pair of temple parts through the flexible circuit board.

10. The smart glass according to claim 1, wherein
a width (W1) of the fastening hole is larger than a width (W2) of the guide hole, and a length (L1) of the fastening hole is smaller than a length (L2) of the guide hole.

11. The smart glass according to claim 1, wherein
the circuit board comprises
an integrated circuit chip provided with one or more of a processor, a memory, a power management module, or a communication module.

12. The smart glass according to claim 11, wherein
the communication module verifies or authenticates the smart glass within a communication network using IMSI (international mobile subscriber identity) information stored in the smart glass.

13. The smart glass according to claim 1, wherein
the temple part is
provided with a speaker module capable of outputting an audio signal to the outside.
